# EUROPEAN PATENT SPECIFICATION

(11) **EP 4 378 745 B1**
(45) Date of publication and mention of the grant of the patent: **25.03.2026**
(21) Application number: 23213780.2
(22) Date of filing: 01.12.2023
(51) Int. Cl.: B60L 53/10, B60L 53/60, B60L 53/50, B60L 53/63, B60L 53/66, B60L 53/67, B60L 53/68

(54) **METHOD AND SYSTEM FOR MANAGING POWER SUPPLY DURING CHARGING OPERATION OF BEVS**
VERFAHREN UND SYSTEM ZUR VERWALTUNG DER STROMVERSORGUNG WÄHREND DES LADEVORGANGS BEVS
PROCÉDÉ ET SYSTÈME DE GESTION D'ALIMENTATION ÉLECTRIQUE PENDANT UNE OPÉRATION DE CHARGE DE BAV

(30) Priority: 02.12.2022 US 202263385826 P
(43) Date of publication of application: 05.06.2024
(73) Proprietor: Carrier Corporation, Palm Beach Gardens, FL 33418 (US)
(72) Inventor: CHAROULET, Guillaume, 76520 Franqueville Saint Pierre (FR); BEAUFRERE, Florian, 76520 Franqueville Saint Pierre (FR)
(74) Representative: Dehns

(56) References cited:
- EP-A1- 3 790 144
- GB-A- 2 595 970
- US-A1- 2011 202 192
- US-A1- 2013 035 802
- US-A1- 2015 266 389
- US-A1- 2021 086 647

## Description

### FIELD OF THE INVENTION

The invention relates to the field of battery electrical vehicles (BEVs). In particular, the invention relates to a method and system for managing power supply during charging operation of BEVs.

### BACKGROUND

Multiple customers are using their electrical grid network to pre-cool or maintain the temperature of transport refrigeration boxes. Most customers have not designed their facilities for the large power draw from the electrical grid. Also, most of the time, the customers switch all units ON around the same timeframe. Such a significant draw on the grid may have a negative impact a network and possibly result in a grid shutdown.

Also, today's refrigeration units on thermal engine trucks don't offer any smart management of the standby operation when they are connected to the electrical grid. The rise of the BEVs will result in a need to optimize the power available on the electrical grid, leading to a need to optimize the logics of recharge to extend battery life or reduce nominal powers draw.

It would be advantageous to provide a method and system that may automatically manage the power supply to the BEVs having transport refrigeration units (TRUs) or to the TRUs batteries.

US 2021/086647 A1 discloses methods, systems, and devices for scheduling electric vehicle charging across multiple customers and multiple fleets of electric vehicles.

### SUMMARY

This summary is provided to introduce a selection of concepts in a simplified format that are further described in the detailed description of the invention. This summary is not intended to identify key or essential inventive concepts of the invention, nor is it intended for determining the scope of the invention, which is as set out in the appended claims.

According to a first aspect of the invention there is provided a vehicle charging system for managing power supply during charging operation of a plurality of BEVs. The system includes a master device connected to a primary grid network. The master device includes at least one processor and a communication interface. The at least one processor is configured to establish a communication with each of a plurality of slave devices installed in the plurality of BEVs and receive input data in real-time via the communication interface from the plurality of slave devices. The input data includes information related to a power level consumed by each of a plurality of Transport Refrigeration Units (TRUs) of the plurality of BEVs during the charging operation, a corresponding operation mode of the plurality of TRUs, a current state of each of the plurality of TRUs. The at least one processor is further configured to calculate total power currently utilized by the plurality of TRUs based on the received input data. After the calculation of the total power, the at least one processor is further configured to determine a probability whether the calculated total power exceeds a maximum allowed power provided by the primary grid network during the charging operation in case a new charging request is received from a new slave device. Further, based on the determined probability, the at least one processor is configured to regulate a power allocation of a group of TRUs among the plurality of the TRUs such that the total calculated power remains below a saturation point of the maximum allowed power. The master device is configured to manage power allocation to the TRUs, BEVs recharge operations, and other charging operations.

Optionally, the at least one processor may be further configured to receive, based on a user input, a priority request from at least one slave device of the plurality of slave devices for authorization to utilize an excess amount of power from the primary grid network in comparison to an allocated power of the at least one TRU. Thereafter, the at least one processor may be further configured to authorize the at least one TRU for utilizing the excess amount of power from the primary grid network in case the total calculated power is within the saturation point of the maximum allowed power.

Optionally, the at least one processor may be further configured to estimate, based on the authorization, each of a remaining time to reach a setpoint and a remaining time required for a full recharge of the BEV associated with the at least one slave device from which the priority request is received. Thereafter, the at least one processor may be further configured to control a graphical user interface (GUI) of the BEV or TRU associated with the at least one slave device to display each of the estimated remaining time to reach the setpoint and the estimated remaining time required for the full recharge.

Optionally, the at least one processor may be further configured to estimate a remaining time required for a full recharge of each of the plurality of BEVs based on the total calculated power, and then controls the GUI of each of the plurality of BEVs to display each of the estimated remaining time required for the full recharge.

Optionally, the master device is connected with the plurality of slave devices in one of a point-to-point configuration or a multipoint configuration.

Optionally, the at least one processor may be further configured to regulate, based on the determined probability, the power allocation for each of the plurality of TRUs in a case where the master device is connected with the plurality of slave devices in the multipoint configuration.

Optionally, the established communication corresponds to one of an electrical-based communication, a Controlled Area Network (CAN) based communication, a Power Line Communication (PLC), or wireless communication.

Optionally, the regulation of the power allocation corresponds to a command from the master device to a group of slave devices among the plurality of slave devices to reduce or increase a power intake from the primary grid network to avoid power overloading.

Optionally, the input data is received periodically from each of the plurality of the slave devices. The corresponding operation modes may include a cooling mode, a heating mode, a standby mode of the plurality of TRUs, a null mode, or a recharge mode of a battery of corresponding BEVs. The null mode corresponds to a ventilation mode. The current state of each of the plurality of TRUs corresponds to one of an ON state or an OFF state.

According to a second aspect of the invention there is provided a method for managing power supply during charging operation of a plurality of BEVs. The method includes establishing a communication with each of a plurality of slave devices installed in the plurality of BEVs and then receiving input data in real-time via the communication interface from the plurality of slave devices. The input data includes information related to a power level consumed by each of a plurality of Transport Refrigeration Units (TRUs) of the plurality of BEVs during the charging operation, a corresponding operation mode of the plurality of TRUs, a current state of each of the plurality of TRUs. The method further includes calculating a total power currently utilized by the plurality of TRUs based on the received input data. Thereafter, the method further includes determining a probability whether the calculated total power exceeds a maximum allowed power provided by the primary grid network during the charging operation in case a new charging request is received from a new slave device. The method further includes regulating, based on the determined probability, a power allocation of a group of TRUs among the plurality of the TRUs such that the total calculated power remains below a saturation point of the maximum allowed power. The master device manages power allocation to the TRUs, BEVs recharge operations, and other charging operations.

Optionally, the method may further include receiving, based on a user input, a priority request from at least one slave device of the plurality of slave devices for authorization to utilize an excess amount of power from the primary grid network in comparison to an allocated power of the at least one TRU. The method may further include authorizing the at least one TRU for utilizing the excess amount of power from the primary grid network in case the total calculated power is within the saturation point of the maximum allowed power.

Optionally, the method may further include estimating, based on the authorization, each of a remaining time to reach a setpoint and a remaining time required for a full recharge of the BEV associated with the at least one slave device from which the priority request is received. The method may further include controlling the GUI of the BEV associated with the at least one slave device to display each of the estimated remaining time to reach the setpoint and the estimated remaining time required for the full recharge.

Optionally, the method may further include estimating a remaining time required for a full recharge of each of the plurality of BEVs based on the total calculated power and thereafter controlling the GUI of each of the plurality of BEVs to display each of the estimated remaining time required for the full recharge.

Optionally, the master device is connected with the plurality of slave devices in one of a point-to-point configuration or a multipoint configuration.

Optionally, the method may further include regulating, based on the determined probability, the power allocation for each of the plurality of TRUs in a case where the master device is connected with the plurality of slave devices in the multipoint configuration.

Optionally, the regulation of the power allocation corresponds to a command from the master device to a group of slave devices among the plurality of slave devices to reduce or increase a power intake from the primary grid network to avoid power overloading.

To further clarify the advantages and features of the method and system, a more particular description of the method and system will be rendered by reference to specific embodiments thereof, which are illustrated in the appended drawing. It is appreciated that these drawings depict only typical embodiments of the invention and are therefore not to be considered limiting its scope, which is as set out in the appended claims. The invention will be described and explained with additional specificity and detail with the accompanying drawings.

### BRIEF DESCRIPTION OF THE DRAWINGS

These and other features, aspects, and advantages will become better understood when the following detailed description is read with reference to the accompanying drawings in which like characters represent like parts throughout the drawings.

Certain exemplary embodiments will now be described in greater detail by way of example only and with reference to the accompanying drawings in which:
FIG. 1A illustrates a conventional vehicle charging system, in accordance with a conventional art;
FIG. 1B illustrates a standard state of the conventional vehicle charging system, in accordance with a conventional art;
FIG. 2 illustrates a graphical representation indicating a problem of overload network stress with the conventional vehicle charging system;
FIGS. 3A and 3B illustrate customer grid configurations of a vehicle charging system, in accordance with a conventional art;
FIG. 4A illustrates a vehicle charging system having a point-to-point customer grid configuration;
FIG. 4B illustrates a vehicle charging system having a split customer grid configuration;
FIG. 5A illustrates a system architecture of a master device of the system of FIG. 4A;
FIG. 5B illustrates a system architecture of a master device of the system of FIG. 4B;
FIG. 6 illustrates a system architecture of a slave device of the system shown in FIGS. 4A and 4B;
FIGS. 7A, 7B, 7C, and 7D illustrate communication configurations between the master device and the slave devices in the point-to-point customer grid configuration;
FIG. 8 illustrates an example representation of power line communication between the master device and the slave devices in the point-to-point customer grid configuration;
FIGS. 9A, 9B, 9C, and 9D illustrate communication configurations between the master device and the slave devices in the split customer grid configuration;
FIG. 10 illustrates an example representation of power line communication between the master device and the slave devices in the split customer grid configuration;
FIG. 11 illustrates a flowchart of method steps for managing power supply during charging operation of BEVs;
FIG. 12 illustrates a graphical representation indicating example management of power supply to overcome the overload network stress;
FIG. 13 illustrates an example case of handling a priority request from TRUs of the BEVs and the power allocation; and
FIGS. 14A and 14B illustrate an example GUI for managing power supply between the BEVs components when connected to the electrical grid.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the invention. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION

It should be understood at the outset that although illustrative implementations of embodiments are illustrated below, the system and method may be implemented using any number of techniques. The invention should in no way be limited to the illustrative implementations, drawings, and techniques illustrated below, including the exemplary design and implementation illustrated and described herein, but may be modified within the scope of the appended claims.

The term "some" as used herein is defined as "one, or more than one, or all." Accordingly, the terms "one," "one or more," but not all" or "all" would all fall under the definition of "some." The term "some embodiments" may refer to one embodiment or one or more embodiments or all embodiments. Accordingly, the term "some embodiments" is defined as meaning "one embodiment, or more than one embodiment, or all embodiments."

The terminology and structure employed herein are for describing, teaching, and illuminating some embodiments and their specific features and elements and do not limit, restrict, or reduce the scope of the claims.

More specifically, any terms used herein such as but not limited to "includes," "comprises," "has," "have" and grammatical variants thereof do not specify an exact limitation or restriction and certainly do not exclude the possible addition of one or more features or elements, unless otherwise stated, and must not be taken to exclude the possible removal of one or more of the listed features and elements, unless otherwise stated with the limiting language "must comprise" or "needs to include."

The term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Unless otherwise defined, all terms, and especially any technical and/or scientific terms, used herein may be taken to have the same meaning as commonly understood by one having ordinary skill in the art.

Embodiments will be described below in detail with reference to the accompanying drawings.

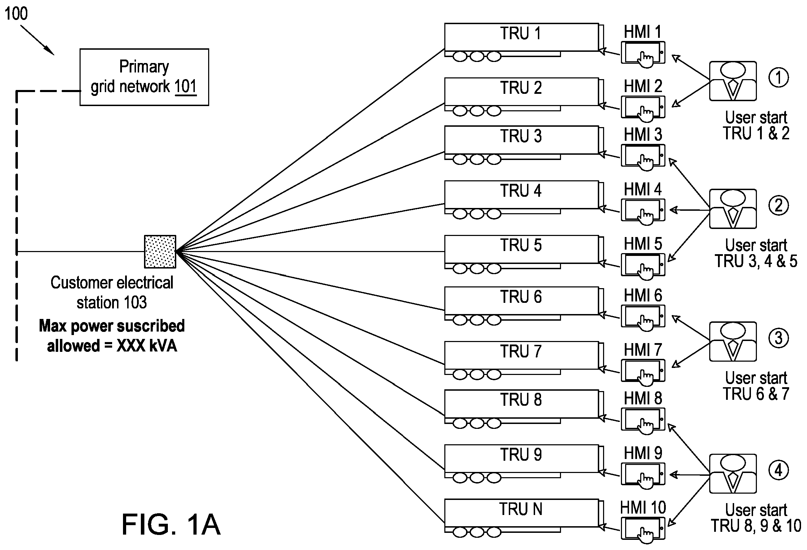

**FIG. 1A** illustrates a conventional vehicle charging system, in accordance with the prior art. The system 100 includes a primary grid network 101, a customer electrical station 103, a plurality of transport refrigeration units (TRUs) including TRU 1, TRU 2, TRU 3, ..., TRU N, and a plurality of human machine interfaces (HMIs) including HMI 1, HMI 2, HMI 3, ..., HMI N. A corresponding HMI among the plurality of HMls is connected to a corresponding TRU among the plurality of TRUs. The customer electrical station 103 is connected to the primary grid network 101. The primary grid network 101 may include power transmission towers that may be connected to the same grid or different grids and may transmit electric power to the customer electrical station 103 through power lines. Information regarding an individual customer electrical station 103 can be gathered in the primary grid network 101.

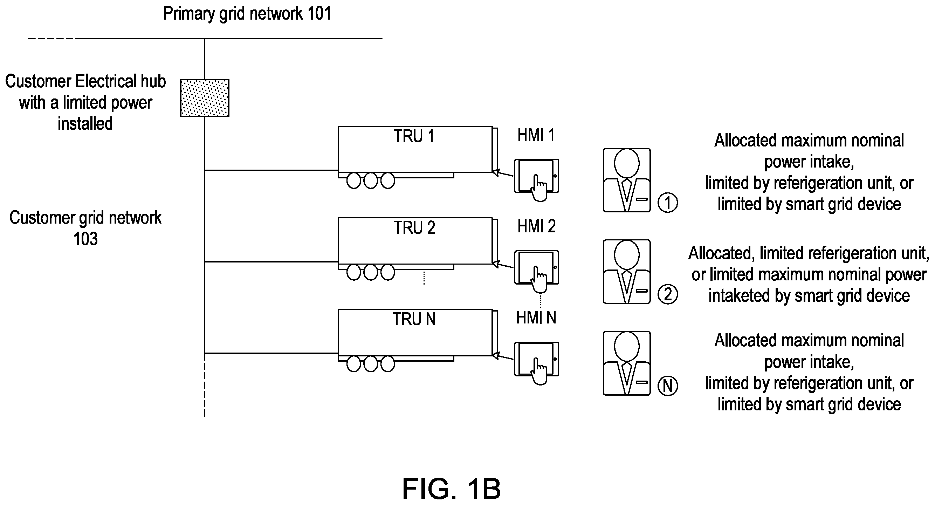

**FIG. 1B** illustrates a standard state of the vehicle charging system, in accordance with the prior art. In the standard state, limited power is provided to each of the TRUs for a balanced and limited standby network. It cannot handle priority requests for managing power supply to the TRUs due to the limitation of power that is provided to each of the TRUs for the balanced and the limited standby network. As a non-limiting example, the apparent power allowed by the primary grid network 101 for the connected TRUs is 200 kVA.

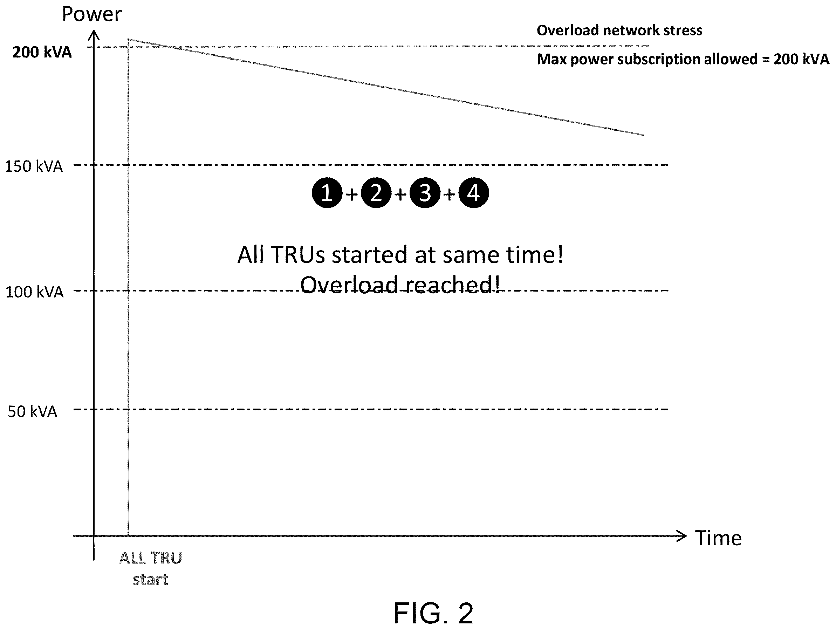

**FIG. 2** illustrates a graphical representation indicating a problem of overload network stress with the conventional (prior art) vehicle charging system. As can be seen in FIG. 2 of the drawings, when the TRUs 1, 2, ..., N were started at the same time by users 1 to 4 the overload network stress increases beyond the maximum limit of the apparent power and the power supply to the BEVs having the TRUs fails. As a non-limiting example, here the maximum limit of the apparent power (maximum power subscription allowed) is 200kVA for 10 TRUs.

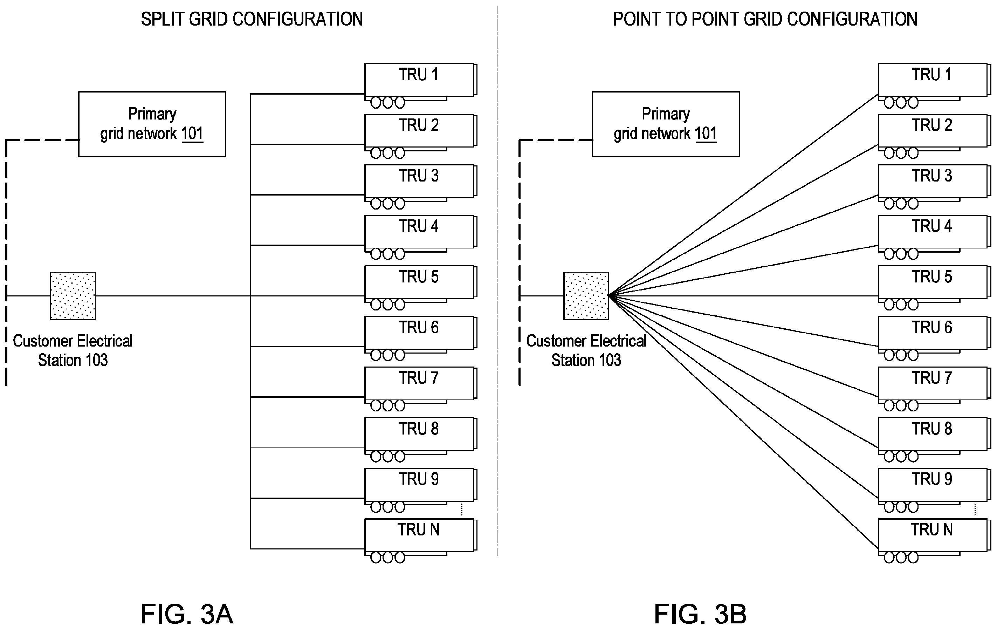

The system 100 may have different customer grid configurations. FIG. 3A illustrates a split grid configuration in which the customer electrical station 103 is connected to the plurality of TRUs (1 to N) in a split manner, in accordance with the conventional art. FIG. 3B illustrates a point-to-point grid configuration in which the customer electrical station 103 is connected to the plurality of TRUs (1 to N) in a pointwise manner, in accordance with the conventional art.

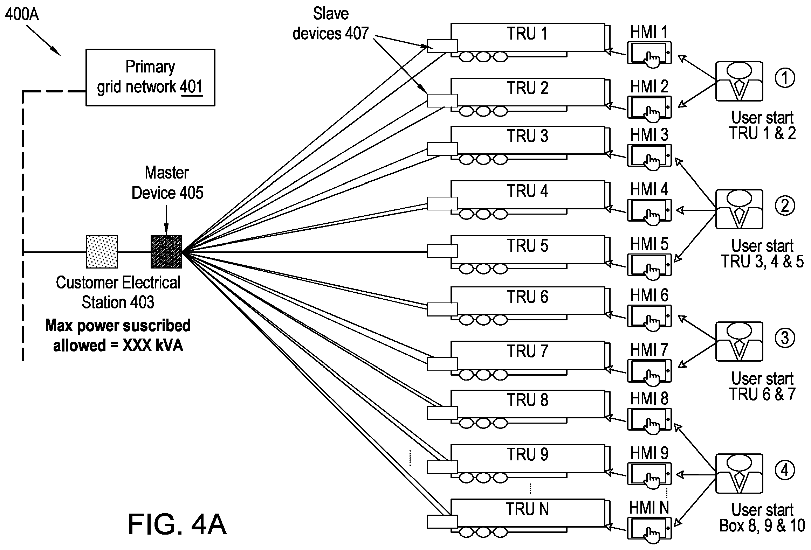

Referring now to **FIG. 4A** illustrates a vehicle charging system 400A having a point-to-point customer grid configuration, in accordance with one or more embodiments that are disclosed herein. The system 400A includes a primary grid network 401, a customer electrical station 403, a master device 405, a plurality of BEVs including a plurality of TRUs (TRU 1, TRU 2, TRU 3, ... , TRU N), a plurality of slave devices 407 connected with the TRUs of the BEVs, and a plurality of human machine interfaces (HMIs) including HMI 1, HMI 2, HMI 3, ..., HMI N. A corresponding HMI among the plurality of HMls is connected to a corresponding TRU among the plurality of TRUs. The customer electrical station 403 is connected to the primary grid network 401. The primary grid network 401 may include power transmission towers that may be connected to the same grid or different grids and may transmit electric power to the customer electrical station 403 through power lines. Information regarding an individual customer electrical station 403 can be gathered in the primary grid network 401. As a non-limiting example, here the maximum power subscription allowed by the customer electrical station 403 is 100 kVA for TRU 1 through TRU N. Those skilled in the art will appreciate that one or more examples of the maximum power subscription allowed is merely exemplary and is not intended to limit the scope of the invention, which is as set out in the appended claims.

The master device 405 is the main component of the system 400A and controls the entire power supply management operation between the customer electrical station 403 and the slave devices 407 in different types of charging operation modes of the BEVs. The master device 405 manages power allocation to the TRUs, BEVs recharge operations, and other charging operations.

When the users of the BEVs start the TRUs or provide input regarding a change of the charging operation mode, then, in that case, the master device 405 may regulate a power allocation of a group of TRUs among the plurality of the TRUs such that the total consumption of power remains below a saturation point of the maximum limit of the apparent power. The master device 405 may also regulate the power allocation for each of the plurality of TRUs in a case where the master device 405 is connected with each of the slave devices 407 in the multipoint grid configuration.

The HMI (1 to N) may include a graphical user interface to receive the user inputs from the users of the BEVs when the users interact with the HMls. The user input may include a change of a charging operation mode or a priority request for a power supply. The charging operation mode may include a mode to charge a battery of the TRU, a direct power supply to the TRU to cool or heat the refrigeration compartment of the BEVs to a set point, or a mode in which charging of a battery of the TRU along with the direct power supply to the TRU may be requested by at least one user of the BEV concurrently.

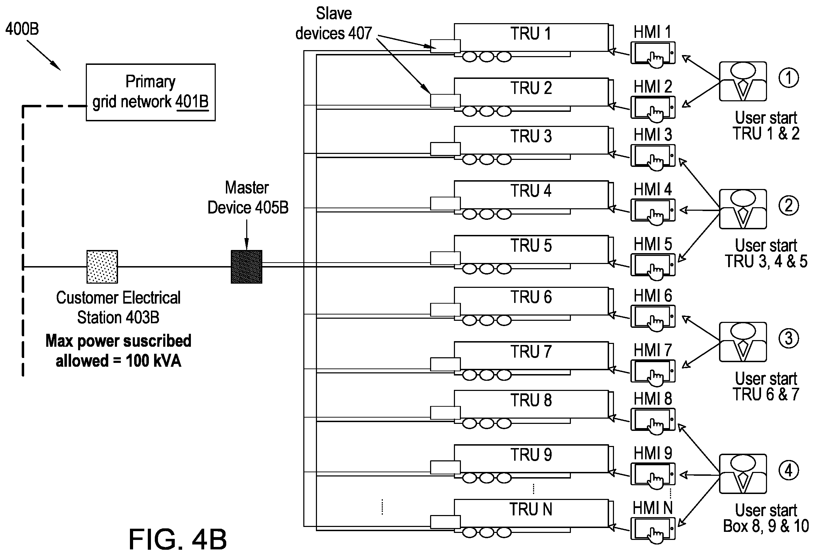

Referring now to **FIG. 4B** illustrates a vehicle charging system 400B having a split customer grid configuration, in accordance with one or more embodiments that are disclosed herein. The system 400A includes a primary grid network 401B, a customer electrical station 403B, a master device 405B, a plurality of BEVs including a plurality of TRUs (TRU 1, TRU 2, TRU 3, ... , TRU N), a plurality of slave devices 407B connected with the TRUs of the BEVs, and a plurality of human machine interfaces (HMIs) including HMI 1, HMI 2, HMI 3, ..., HMI N. A corresponding HMI among the plurality of HMls is connected to a corresponding TRU among the plurality of TRUs. The customer electrical station 403 is connected to the primary grid network 401. The primary grid network 401 may include power transmission towers that may be connected to the same grid or different grids and may transmit electric power to the customer electrical station 403 through power lines. Information regarding an individual customer electrical station 403 can be gathered in the primary grid network 401.

The functionalities of the components of the system 400B are the same as that of the components of the system 400A and therefore a detailed explanation is omitted herein for the sake of brevity. The only difference between the system 400A and the system 400B is the grid configuration. In the system 400B, the master device 405B is connected to the respective slave devices 407B in a split manner. The functionalities of the master device 405 of system 400A and the master device 405B of the system 400B are the same and therefore the functionalities and operations of the system are described herein with respect to the master device 405 without deviating from the scope of the invention, which is as set out in the appended claims.

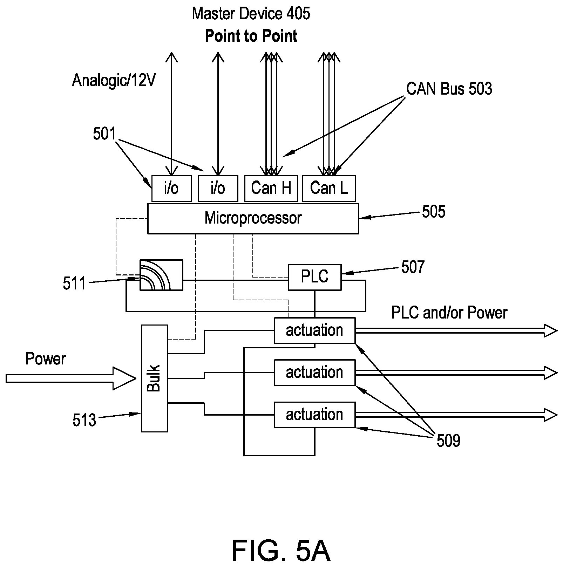

**FIG. 5A** illustrates a system architecture of the master device 405 of the system 400A of FIG. 4A, in accordance with one or more embodiments of the invention. The master device 405 includes one or more input/output (I/O) interface 501, a Controller Area Network (CAN) bus 503, a microprocessor 505, a Power-Line Communication (PLC) unit, 507, actuation units 509, a wireless communication device 511, and a physical electronic connection interface 513.

The microprocessor 505 uses the I/O interface 501 for data input and data output required in the management of the power supply to the TRUs, battery of the BEVs, power supply for boost mode, etc.

The CAN bus 503 allows the microprocessor 505 of the master device 405 to communicate with each of the slave devices 407 without a host computer. CAN bus protocols uses the onboard diagnostics (OBD)-n vehicle diagnostics standard.

The microprocessor 505 is connected with each of the I/O interface 501, CAN bus 503, the PLC unit 507, and actuation units 509 for receiving data inputs and processing them to perform control operations in various charging operation modes of the BEVs. The microprocessor 505 may analyze the data input from the slave devices 407 installed in the fleet of the TRUs and may allocate power for one or more charging operation modes of one or more BEVs. This data exchange may be performed by the microprocessor 505 either through one of hard signal inputs/output based wired connection, CAN bus communication with BEVs or TRUs, the powerline communication, or remote (Wifi/Bluetooth).

The microprocessor 505 may also regulate a power allocation of a group of TRUs among the plurality of the TRUs such that the total power consumption during the charging operation mode of BEVs remains below a saturation point of the maximum power subscription allowed.

The microprocessor 505 may also regulate the power allocation for each of the plurality of TRUs in a case where the master device 405 is connected with the slave devices 407 in the multipoint grid configuration.

The PLC unit 507 is configured to perform power line communication using power cable hardware to communicate between the TRUs and the master device master device 405. The TRUs may have a dual transmitter/receiver and the PLC unit 507 may establish the communication between the master device and the TRUs by using a protocol. Through the protocol, the PLC unit 507 may exchange power level, unit mode type, etc. The PLC unit 507 may also transmit data to the slave devices 407 using power cables such as power lines. In the case of using power lines, power and data transmission can be done with a single cable, which can reduce the types of cables in the network. The PLC unit 507 modulates the data before the transmission, and the modulated signal is superimposed on the AC or DC power supply voltage. The PLC unit 507 can be used on AC power lines as well as on DC power lines. As a non-limiting example, on DC power lines, the PLC unit 507 can be used for storage batteries, lighting, EV charging, etc.

The actuation units 509 correspond to a hardware device that is capable of providing power to the TRUs or for cutting-off power to the TRUs. In particular, the actuation units 509 is an on/off device like a contactor. The contactor is directly managed by the microprocessor 505 or 505B. The microprocessor 505 or 505B may activate or deactivate the contactor in accordance with the unit mode type. Also, the actuation units 509 are configured to receive power supply from the customer electrical station 403.

The wireless communication device 511 corresponds to wireless communication device configured of WI-Fl^{®}, Bluetooth^{®}, ZigBee^{®}, 6LoWPAN, etc). The wireless communication device 511 also allows the microprocessor 505 of the master device 405 to communicate with each of the slave devices 407 without a host computer.

The physical electronic connection interface 513 is configured to receive power from a plug having the standby cable from the primary grid network 401. In particular, the physical electronic connection interface 513 corresponds to an interface with high AC voltage (for example, a typical network with: 400VAC/3phases/50Hz or 230VAC/1 phase/50 Hz or 12VDC, 24VDC power supply).

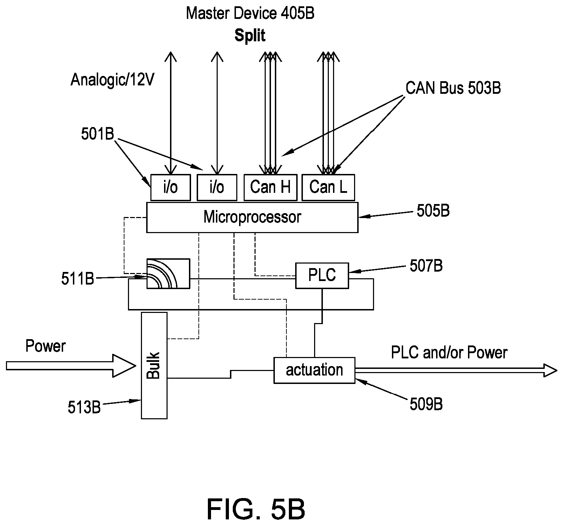

**FIG. 5B** illustrates a system architecture of the master device 405B of the system 400B of FIG. 4B, in accordance with one or more embodiments of the invention. The master device 405B includes one or more input/output (I/O) interface 501B, a Controller Area Network (CAN) bus 503B, a microprocessor 505B, a Power-Line Communication (PLC) unit 507B, and an actuation unit 509B. The microprocessor 505B is connected with each of the I/O interface 501B, CAN bus 503B, the PLC unit 507B, and the actuation unit 509B for receiving data inputs and processing them to perform control operations in various charging operation modes of the BEVs.

The functionalities of the components of the master device 405B are the same as that of the components of the master device 405 and therefore a detailed explanation is omitted herein for the sake of brevity. The only difference between the master device 405B and the master device 405 is the grid configuration in which they are connected. In the system 400B, the master device 405B is connected to the respective slave devices 407B in a split manner. The functionalities of the microprocessor 505B of the master device 405B are the same as that of the microprocessor 505 of the master device 405 and therefore a description illustrating the functionalities and operations of the microprocessor 505B is omitted herein for ease of explanation.

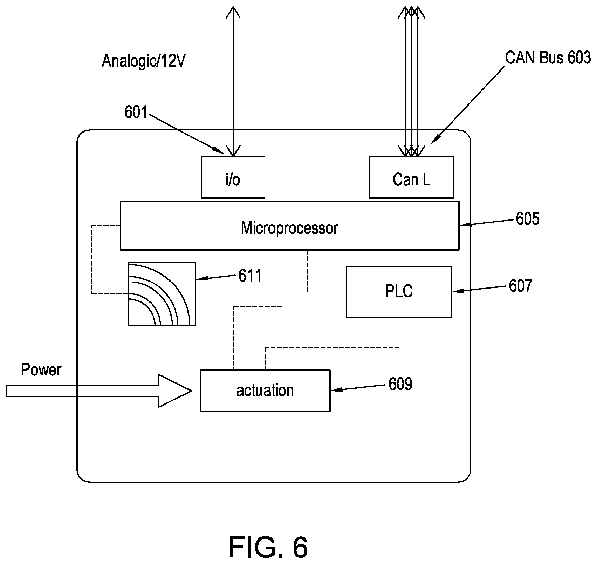

**FIG. 6** illustrates a system architecture of each of the slave devices of the systems 400A and 400B of FIGS. 4A and 4B, in accordance with one or more embodiments of the invention. A respective slave device of the slave devices 407 or 407B is connected to a respective TRU of the TRUs (1 to N) for receiving the power supply from the master device 405 or 405B. The power supply can be received by the slave devices 407 or 407B through one of a standard three-phase AC power standby plug or a standard single-phase AC power standby plug. The power supply can also be received by the slave devices 407 or 407B through a DC power standby plug. The master device 405 or 405B can be connected to the slave devices via various communication configurations including, but not limited to, an analogic I/O 601, CAN bus 603, a powerline communication using the PLC unit 607, or remote Wifi/Bluetooth medium 611.

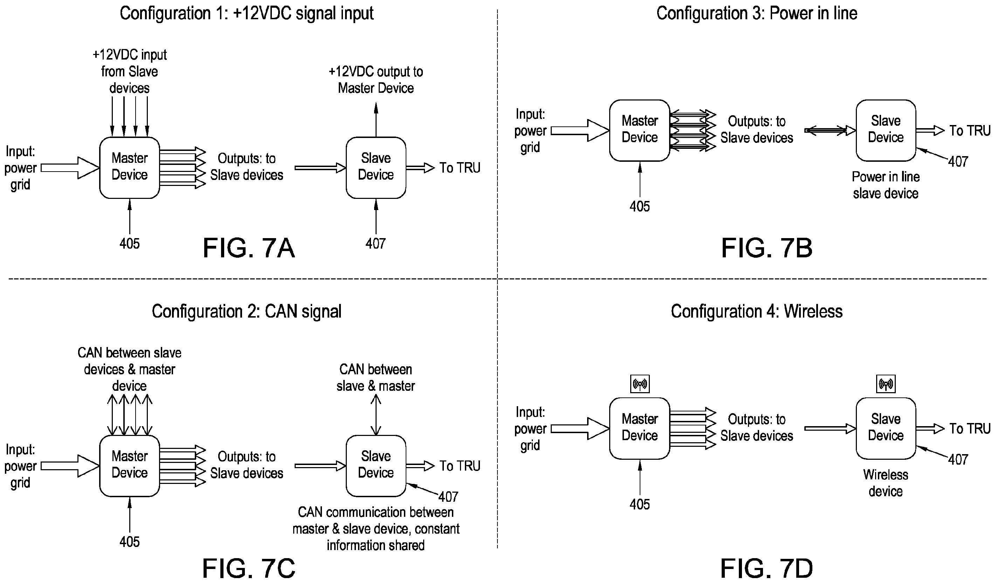

**FIGS. 7A, 7B, 7C, and 7D** illustrate communication configurations between the master device and the slave devices in the point-to-point customer grid configuration. In particular, **FIG. 7A** illustrates the first example of a wired-based communication configuration with a +12VDC signal between the master device 405 and the slave device 407. When the master device 405 detects that +12VDC input is received and the power limit has not reached the maximum power subscription allowed, in that case, the master device 405 energizes the corresponding output. Similarly, when the TRU is connected to the electrical plug and is in an ON state, the slave device 407 may provide a +12VDC signal output to the master device 405.

**FIG. 7B** illustrates a second example communication configuration indicating a CAN signal based communication between the master device 405 and the slave device 407. With the help of CAN communication, the master device 405 and the slave device 407 may share different types of information related to the charging operation modes and power supply with each other. In a case, If the maximum power subscription allowed limit is not reached, at least one slave device among the slave devices 407 may be energized and may start the corresponding TRU.

**FIG. 7C** illustrates a third example communication configuration indicating a power in line communication between the master device 405 and the slave device 407. With the help of the power in line communication, the master device 405 and the slave device 407 may share different types of information related to the charging operation modes and power supply with each other. In a case, If the maximum power subscription allowed limit is not reached, at least one slave device among the slave devices 407 may be energized and may start the corresponding TRU. The slave device 407 receives the data transmitted by the master device 405 and extracts the required data by separating the power supply voltage and the modulated signal with a filter and by performing a demodulation operation to demodulate the modulated signal.

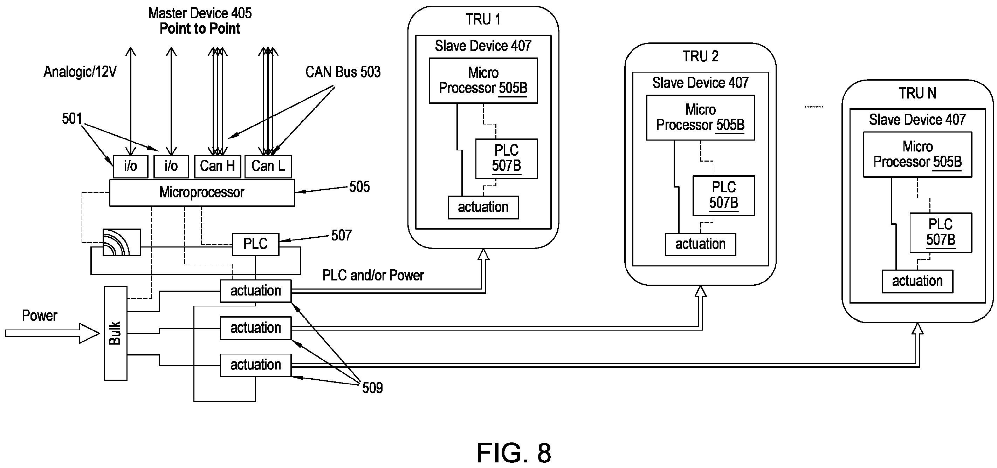

**FIG. 8** illustrates an example representation of power in line communication between the master device 405 and the slave device 407 in the point-to-point grid configuration. As can be seen in FIG. 8, the master device 405 is connected to the slave device 407 of the respective TRUs via the actuation points 509 in the point-to-point grid configuration.

**FIG. 7D** illustrates a fourth example communication configuration indicating a wireless communication between the master device 405 and the slave device 407. The master device 405 and the slave device 407 may share different types of information related to the charging operation modes and power supply with each other with the help of wireless communication.

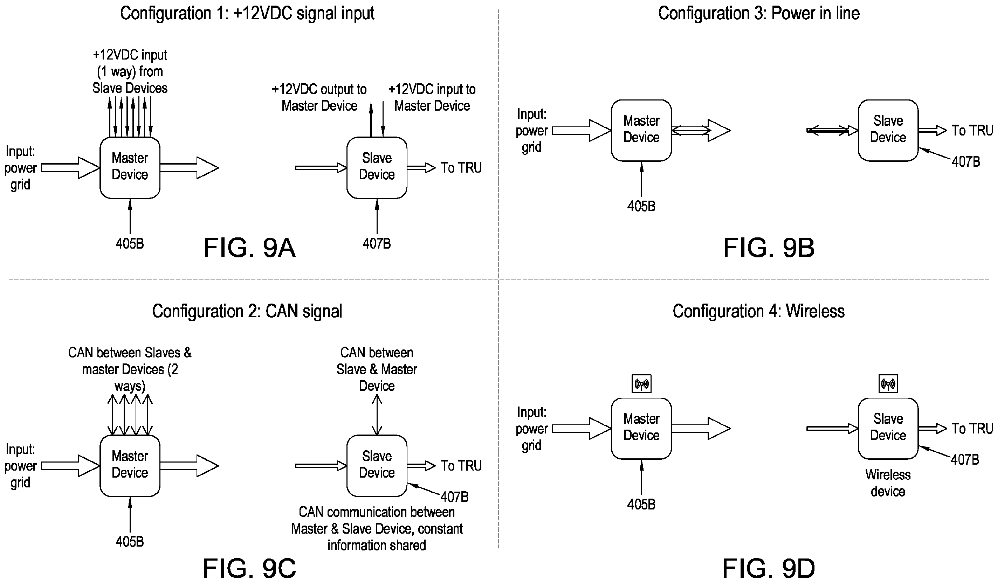

Similarly, **FIGS. 9A, 9B, 9C, and 9D** illustrate communication configurations between the master device 405B and the slave devices 407B in the split grid configuration. The communication configuration between the master device 405B and the slave devices 407B in the split grid configuration is the same as that of the communication configuration between the master device 405 and the slave devices 407 in the point-to-point grid configuration except for the connection between the master device 405B and the slave devices 407B. Therefore, a detailed explanation of the communication configuration examples is omitted herein for the sake of brevity and ease of explanation. In the split grid configuration, the master device 405B is connected to the respective slave devices 407B of the respective TRUs in a split manner.

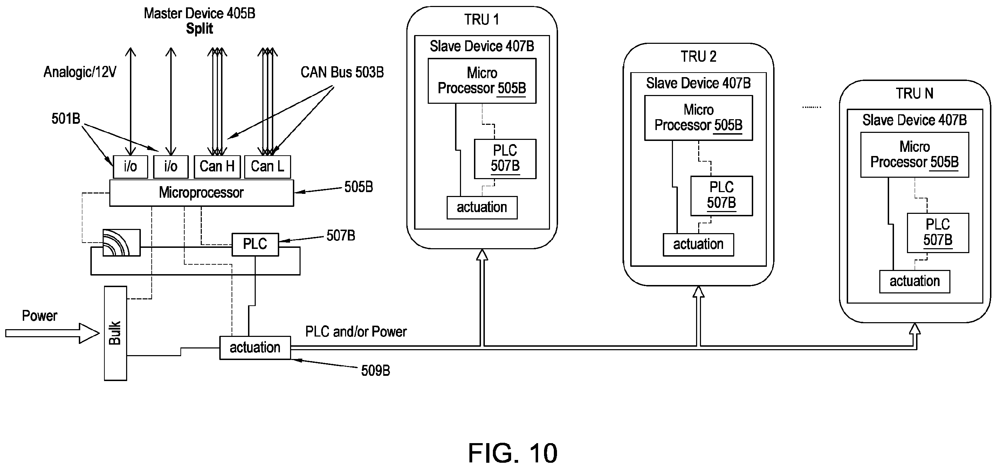

Further, **FIG. 10** illustrates an example representation of power in line communication between the master device 405B and the slave device 407B in the split grid configuration. As can be seen in FIG. 10, the master device 405B is connected to the slave device 407B of the respective TRUs via the actuation point 509B in the split grid configuration.

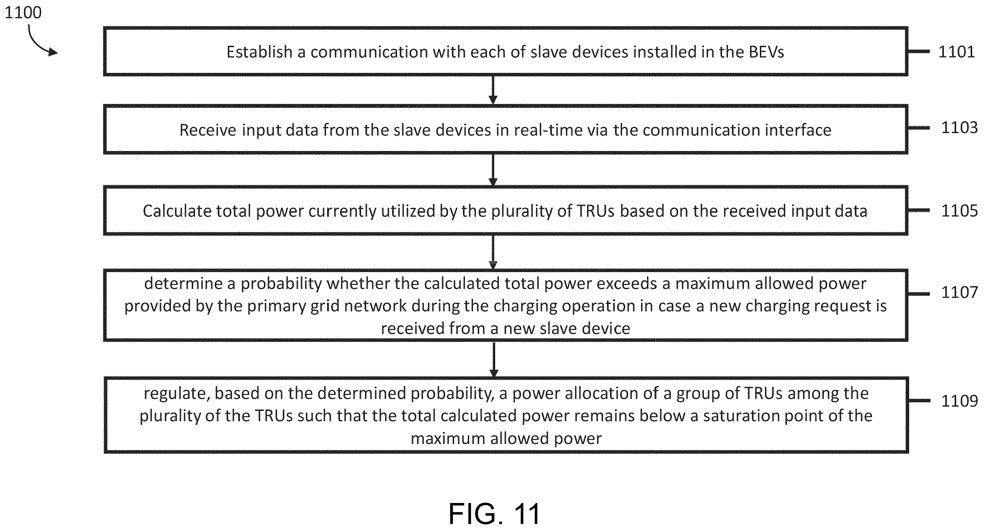

Referring now to **FIG. 11** illustrates a flowchart of method steps for managing power supply during charging operation of the BEVs. FIG. 11 depicts a method 1100 that is executed by the microprocessor 505 of the master device 405 or the microprocessor 505B of the master device 405B. For ease of explanation, "the microprocessor 505" is used for describing the operations of the master device 405 or 405B.

At step 1101 of method 1100, the microprocessor 505 establishes a communication with each of the slave devices 407 installed in the BEVs via one of the communication configurations described above. In particular, communication between the master device 405 and each of the slave devices 407 is established using through one of hard signal inputs/output based wired connection, CAN bus communication with BEVs or TRUs, the powerline communication, or the remote (Wifi/Bluetooth) connection. The flow of the method 1100 now proceeds to (step 1103).

At step 1103, the microprocessor 505 receives input data from the slave devices 407 in real-time via the established communication. The microprocessor 505 may receive the input data periodically from each of the slave devices 407. As a non-limiting example, the input data may include information related to a power level consumed by each of the TRUs of the BEVs during charging operation modes, a corresponding operation mode of the TRUs, and a current state of each of the TRUs. The charging operation modes may include but are not limited to, a mode to charge the battery of the TRUs, a direct power supply to the TRUs to cool or heat the refrigeration compartment of the BEVs to a right set point, a mode in which charging of a battery of the TRU along with the direct power supply to the TRU may be requested by at least one user of the BEV concurrently.

The corresponding operation modes of the TRUs may include but are not limited to, a cooling mode, a heating mode, a null mode, a recharge mode of a battery of the corresponding TRUs,or a standby mode of the plurality of TRUs. The current state of each of the TRUs corresponds to one of an ON state or an OFF state. The flow of the method 1100 now proceeds to (step 1105).

At step 1105, after the reception of the input data, the microprocessor 505 calculates, based on the received input data, the total power that is currently utilized by the TRUs that are connected to the master device 405 through the slave devices 407. As a non-limiting example, let's consider the user starts the TRU 1, TRU 2, TRU 5, TRU 6, and TRU 8 by providing user input to the respective HMI 1, HMI 2, HMI 5, HMI 6, and HMI 8, after the establishment of the communication between the master device 405 and the slave devices 407. Then, in such case, the microprocessor 505 may calculate the total power that is currently utilized by the TRUs (TRU 1, TRU 2, TRU 5, TRU 6, and TRU 8) that were started by the respective users. The flow of the method 1100 now proceeds to (step 1107).

At step 1107, once the total power utilized by the TRUs that are connected to the master device 405, the microprocessor 505 determines a probability whether the calculated total power exceeds the maximum power subscription allowed by the primary grid network 401 during the charging operation each time when a new charging request is received from a newly connected slave device. The flow of the method 1100 now proceeds to (step 1109).

At step 1109, based on a result of the determination of step 1107, the microprocessor 505 regulates a power allocation of a group of TRUs among the TRUs connected to the master device 405 such that the total calculated power remains below a saturation point of the maximum power subscription allowed by the primary grid network. The regulation of the power allocation by the microprocessor 505 may correspond to a command from the master device 405 to a group of slave devices among the slave devices 407 to reduce or increase a power intake from the primary grid network 401 to avoid power overloading.

In one or more embodiments, based on a result of the determination of the probability, the microprocessor 505B may also regulate the power allocation of the group of TRUs each of the TRUs in a case where the master device 405B is connected with the slave devices 407B in the multipoint grid configuration or the split grid configuration.

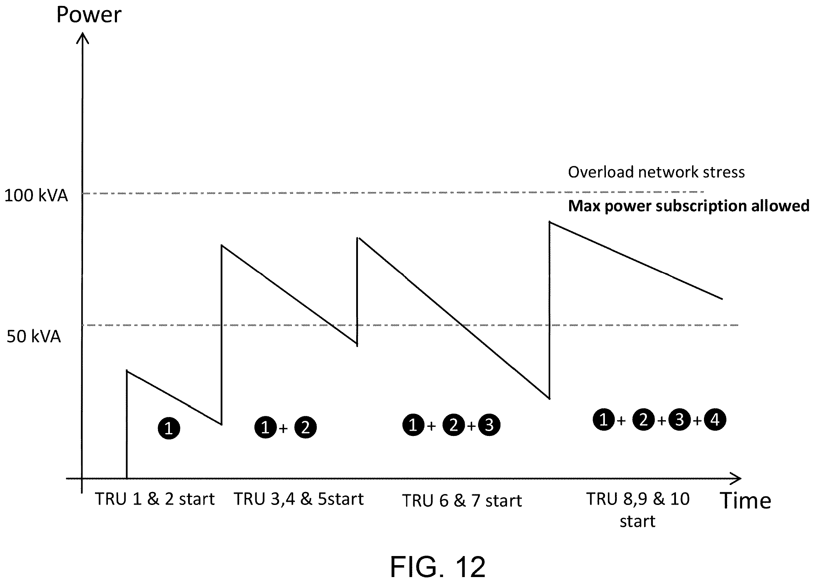

Due to regulation of the power allocation by the microprocessor 505 or 505B, the network overload stress does not increase beyond the maximum limit of the apparent power and the power supply to the BEVs having the TRUs is maintained below the saturation point. As an example, **FIG. 12** illustrates a graphical representation indicating example management of the power supply to overcome the overload network stress in a case when the users of the BEVs start all the TRUs. As a non-limiting example, it can be seen in FIG. 12 that the maximum limit of the apparent power is 100 kVA. When the users of the BEVs start the TRUs 1 to 10 subsequently, the network overload stress does not increase beyond the 100 kVA and the power supply to the TRUs continues to be maintained below the saturation point of the maximum limit of the apparent power. Therefore, this leads to a benefit of a decrease in the investment cost on the grid network or a decrease in the contract cost subscription with electricity providers because power supply to the multiple TRUs can be handled efficiently with the help of a single electrical grid in accordance with the method and system of the invention.

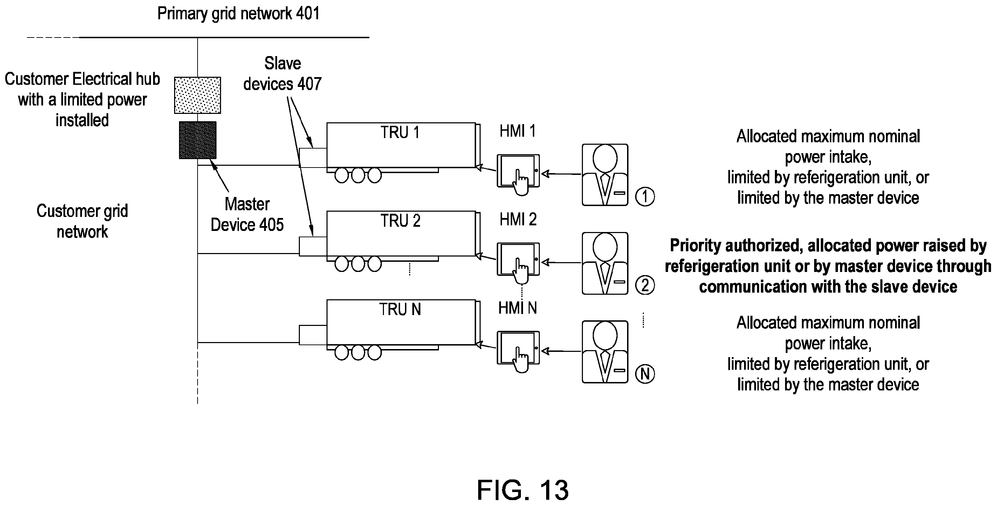

In one or more embodiments, the microprocessor 505 or 505B may also provide widgets on the GUI of the HMls for receiving the priority request from the users to prioritize a pulldown and/or recharge of the battery of a TRU among a large fleet of TRUs running on the power of the same electrical grid. When the slave devices 407 are connected to the electrical grid via the master device 405 or 405B, the microprocessor 505 or 505B controls the GUI of the HMls to display widgets that give an estimation of the remaining time of recharge based on live measurement of current power supply level for BEVs operation mode or recharge of the TRUs or other usage. When a user provides an input to the system 400A or 400B by interacting with the displayed widget, it triggers a boost operation. **FIG. 13** illustrates an example case of handling a priority request from at least one TRU of the BEVs and the power allocation. In particular, the microprocessor 505 may receive, based on a user input, a priority request from at least one slave device of the slave devices 407 for authorization to utilize an excess amount of power from the primary grid network 401 in comparison to an allocated power of at least one TRU of the TRUs (1 to N). Further, the microprocessor 505 may also authorize the at least one TRU for utilizing the excess amount of power from the primary grid network 401 in case the total calculated power is within the saturation point of the maximum power subscription allowed.

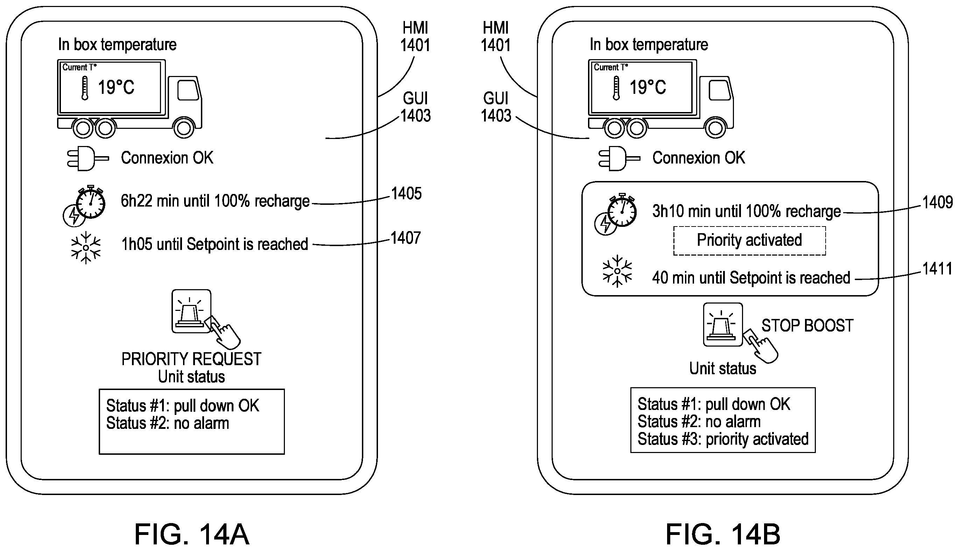

Further, **FIGS. 14A and 14B** each illustrate a non-limiting example representation of the GUI displayed on the HMls for managing the power supply to the BEVs components when the BEVs are connected to the electrical grid. As can be seen from FIG. 13, when the second user inputs a priority request for allocation of power for the refrigeration unit by interacting with the HMI 2, then the master device 405 or 405B receives the priority request from the slave device 407 and regulates the power allocation of the TRU 2 by providing authorization to the TRU 2 to use boost charging mode for faster charging in response to the received priority request. The boost charging mode can be stopped manually by the users of the BEVs.

In one or more embodiments, the microprocessor 505 may estimate, based on the provided authorization, each of a remaining time to reach a setpoint and a remaining time required for a full recharge of the battery of BEV or the TRUs, associated with the at least one slave device 407 from which the priority request is received. Further, the microprocessor 505 may also control the GUI of the HMI associated with the at least one slave device of the slave devices 407 to display each of the estimated remaining time to reach the setpoint and the estimated remaining time required for the full recharge of the battery.

According to yet another embodiment, the microprocessor 505 may estimate a remaining time required for the full recharge of the battery of each of the BEVs based on the total calculated power. Further, the microprocessor 505 may also control the GUI of each of the HMls installed in the BEVs to display each of the estimated remaining time required for the full recharge of the battery.

As can be seen in FIG. 14A of the drawings, an HMI 1401 with a GUI 1403 is displayed to the user. As a non-limiting example, it can be seen that GUI 1403 indicates the estimated remaining time 1407 to reach the setpoint and the estimated remaining time 1405 required for the full recharge of the battery. By displaying the estimated remaining time 1407 to reach the setpoint and the estimated remaining time 1405 required for the full recharge of the battery to the customer, the customer may plan his daily work and deliverables as per the expected time of recharge of TRU and/or the BEV.

Further, it can be seen in FIG. 14B of the drawings, the GUI 1403 is controlled by the microprocessor 505 or 505B to display, after the activation of the priority request based on the authorization, the updated remaining time 1411 to reach the setpoint and the updated remaining time 1409 required for the full recharge of the battery of the TRUs. Those skilled in the art will appreciate that the aforementioned GUI display examples are merely exemplary and are not intended to limit the scope of the invention, which is as set out in the appended claims. By controlling the GUI display as described herein, the master device 405 or 405B provides the customers the possibility to request a "boost operation" for priority pull-down and/or recharge the battery in case the BEV needs to be reused sooner than previously expected.

As would be apparent to a person in the art, various working modifications may be made to the method in order to implement the inventive concept as taught herein.

Moreover, the actions of any flow diagram need not be implemented in the order shown; nor do all of the acts necessarily need to be performed. Also, those acts that are not dependent on other acts may be performed in parallel with the other acts.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

## Claims

1. A vehicle charging system (400A;400B) for managing power supply during charging operation of a plurality of battery electrical vehicles, BEVs, comprising:
a master device (405;405B) connected to a primary grid network (401;401B), wherein
the master device (405;405B) includes at least one processor (505;505B) and a communication interface (501;501B), and
the at least one processor (505;505B) is configured to:
establish a communication (503,507,511;503B,507B,511B) with each of a plurality of slave devices (407;407B) installed in the plurality of BEVs;
receive, in real-time via the communication interface (501;501B) from the plurality of slave devices (407;407B), input data including information related to a power level consumed by each of a plurality of Transport Refrigeration Units, TRUs, of the plurality of BEVs during the charging operation, a corresponding operation mode of the plurality of TRUs, and a current state of each of the plurality of TRUs;
calculate a total power currently utilized by the plurality of TRUs based on the received input data;
determine a probability whether the calculated total power exceeds a maximum allowed power provided by the primary grid network (401;401B) during the charging operation in case a new charging request is received from a new slave device (407;407B); and
regulate, based on the determined probability, a power allocation of a group of TRUs among the plurality of the TRUs such that the total calculated power remains below a saturation point of the maximum allowed power, and
wherein the master device (405;405B) is configured to manage power allocation to the TRUs, BEVs recharge operations, and other charging operations.

2. The system as claimed in claim 1, wherein the at least one processor (505;505B) is further configured to:
receive, based on a user input, a priority request from at least one slave device (407;407B) of the plurality of slave devices (407;407B) for authorization to utilize an excess amount of power from the primary grid network (401;401B) in comparison to an allocated power of the at least one TRU; and
authorize the at least one TRU for utilizing the excess amount of power from the primary grid network (401;401B) in case the total calculated power is within the saturation point of the maximum allowed power.

3. The system as claimed in claim 2, wherein the at least one processor (505;505B) is further configured to:
estimate, based on the authorization, each of a remaining time (1411) to reach a setpoint and a remaining time required (1409) for a full recharge of a battery of the BEV associated with the at least one slave device (407;407B) from which the priority request is received; and
control a graphical user interface, GUI, (1403) of the BEV associated with the at least one slave device (407;407B) to display each of the estimated remaining time (1411) to reach the setpoint and the estimated remaining time (1409) required for the full recharge.

4. The system as claimed in any of claims 1 to 3, wherein the at least one processor (505;505B) is further configured to:
estimate a remaining time (1405) required for a full recharge of a battery of each of the plurality of BEVs based on the total calculated power; and
control a graphical user interface, GUI, (1403) of each of the plurality of BEVs to display each of the estimated remaining time (1405) required for the full recharge.

5. The system as claimed in any of claims 1 to 4, wherein the master device (405;405B) is connected with the plurality of slave devices (407;407B) in one of a point-to-point configuration (400A) or a multipoint configuration (400B).

6. The system as claimed in claim 5, wherein the at least one processor (505;505B) is further configured to regulate, based on the determined probability, the power allocation for each of the plurality of TRUs in a case where the master device (405;405B) is connected with the plurality of slave devices (407;407B) in the multipoint configuration (400B).

7. The system as claimed in any of claims 1 to 6, wherein the established communication (503,507,511;503B,507B,511B) corresponds to one of an electrical-based communication, a Controlled Area Network, CAN, (503;503B) based communication, a Power Line Communication, PLC, (507;507B) or a wireless communication (511;511B).

8. The system as claimed in any of claims 1 to 7, wherein the regulation of the power allocation corresponds to a command from the master device (405;405B) to a group of slave devices (407;407B) among the plurality of slave devices (407;407B) to reduce or increase a power intake from the primary grid network (401;401B) to avoid power overloading.

9. The system as claimed in any of claims 1 to 8,
wherein the input data is received periodically from each of the plurality of the slave devices (407;407B),
the corresponding operation modes include at least one of a cooling mode, a heating mode, a null mode, a recharge mode of a battery of corresponding TRUs, or a standby mode of the plurality of TRUs, and
a current state of each of the plurality of TRUs corresponds to one of an ON state or an OFF state.

10. A method (1100) for managing power supply during charging operation of a plurality of battery electrical vehicles, BEVs, comprising:
establishing a communication (503,507,511;503B,507B,511B) with each of a plurality of slave devices (407;407B) installed in the plurality of BEVs (1101);
receiving, in real-time via a communication interface (501;501B) from the plurality of slave devices (407;407B), input data including information related to a power level consumed by each of a plurality of Transport Refrigeration Units, TRUs, of the plurality of BEVs during the charging operation, a corresponding operation mode of the plurality of TRUs, a current state of each of the plurality of TRUs (1103);
calculating a total power currently utilized by the plurality of TRUs based on the received input data (1105);
determining a probability whether the calculated total power exceeds a maximum allowed power provided by a primary grid network (401;401B) during the charging operation in case a new charging request is received from a new slave device (407;407B) (1107); and
regulating, based on the determined probability, a power allocation of a group of TRUs among the plurality of the TRUs such that the total calculated power remains below a saturation point of the maximum allowed power (1109), and
wherein the master device (405;405B) manages power allocation to the TRUs, BEVs recharge operations, and other charging operations.

11. The method as claimed in claim 10, further comprising:
receiving, based on a user input, a priority request from at least one slave device (407;407B) of the plurality of slave devices (407;407B) for authorization to utilize an excess amount of power from the primary grid network (401;401B) in comparison to an allocated power of the at least one TRU; and
authorizing the at least one TRU for utilizing the excess amount of power from the primary grid network (401;401B) in case the total calculated power is within the saturation point of the maximum allowed power.

12. The method as claimed in claim 11, further comprising:
estimating, based on the authorization, each of a remaining time (1411) to reach a setpoint and a remaining time (1409) required for a full recharge of the BEV associated with the at least one slave device (407;407B) from which the priority request is received; and
controlling a graphical user interface, GUI, (1403) of the BEV associated with the at least one slave device (407;407B) to display each of the estimated remaining time (1411) to reach the setpoint and the estimated remaining time (1409) required for the full recharge.

13. The method as claimed in any of claims 10 to 12, further comprising:
estimating a remaining time (1405) required for a full recharge of each of the plurality of BEVs based on the total calculated power; and
controlling a graphical user interface, GUI, (1403) of each of the plurality of BEVs to display each of the estimated remaining time (1405) required for the full recharge.

14. The method as claimed in any of claims 10 to 13,
wherein a master device (405;405B) is connected with the plurality of slave devices (407;407B) in one of a point-to-point configuration (400A) or a multipoint configuration (400B), and
the method further comprises regulating, based on the determined probability, the power allocation for each of the plurality of TRUs in a case where the master device (405;405B) is connected with the plurality of slave devices (407;407B) in the multipoint configuration (405B).

15. The method as claimed in claim 14, wherein the regulation of the power allocation corresponds to a command from the master device (405;405B) to a group of slave devices (407;407B) among the plurality of slave devices (407;407B) to reduce or increase a power intake from the primary grid network (401;401B) to avoid power overloading.

## Patentansprüche

1. Fahrzeugladesystem (400A; 400B) zur Verwaltung der Stromversorgung während des Ladevorgangs einer Vielzahl von batteriebetriebenen Elektrofahrzeugen (BEVs), umfassend:
eine Master-Vorrichtung (405; 405B), die mit einem primären Stromnetz (401; 401B) verbunden ist, wobei
die Master-Vorrichtung (405; 405B) mindestens einen Prozessor (505; 505B) und eine Kommunikationsschnittstelle (501; 501B) beinhaltet, und
der mindestens eine Prozessor (505; 505B) zu Folgendem konfiguriert ist:
Herstellen einer Kommunikation (503, 507, 511; 503B, 507B, 511B) mit jeder einer Vielzahl von Slave-Vorrichtungen (407; 407B), die in der Vielzahl von BEVs installiert sind;
Empfangen, in Echtzeit über die Kommunikationsschnittstelle (501; 501B) von der Vielzahl von Slave-Vorrichtungen (407; 407B), von Eingabedaten, die Informationen beinhalten, die sich auf einen Strompegel, der von jeder einer Vielzahl von Transportkühleinheiten (TRUs) der Vielzahl von BEVs während des Ladevorgangs verbraucht wird, einen entsprechenden Betriebsmodus der Vielzahl von TRUs und einen aktuellen Zustand von jeder der Vielzahl von TRUs beziehen;
Berechnen eines Gesamtstroms, der aktuell von der Vielzahl von TRUs genutzt wird, basierend auf den empfangenen Eingabedaten;
Bestimmen einer Wahrscheinlichkeit, ob der berechnete Gesamtstrom einen maximal zulässigen Strom überschreitet, der vom primären Stromnetz (401; 401B) während des Ladevorgangs bereitgestellt wird, falls eine neue Ladeanforderung von einer neuen Slave-Vorrichtung (407; 407B) empfangen wird; und
Regeln einer Stromzuteilung einer Gruppe von TRUs aus der Vielzahl von TRUs basierend auf der ermittelten Wahrscheinlichkeit derart, dass der berechnete Gesamtstrom unter einem Sättigungspunkt des maximal zulässigen Stroms bleibt, und wobei die Master-Vorrichtung (405; 405B) dazu konfiguriert ist, die Stromzuteilung an die TRUs, die Aufladevorgänge der BEVs und andere Ladevorgänge zu verwalten.

2. System nach Anspruch 1, wobei der mindestens eine Prozessor (505; 505B) ferner zu Folgendem konfiguriert ist:
Empfangen, basierend auf einer Benutzereingabe, einer Prioritätsanforderung von mindestens einer Slave-Vorrichtung (407; 407B) der Vielzahl von Slave-Vorrichtungen (407; 407B) für die Autorisierung zur Nutzung einer überschüssigen Strommenge aus dem primären Stromnetz (401; 401B) im Vergleich zu einem zugeteilten Strom der mindestens einen TRU; und
Autorisieren der mindestens einen TRU, die überschüssige Strommenge aus dem primären Stromnetz (401; 401B) zu nutzen, falls der berechnete Gesamtstrom innerhalb des Sättigungspunktes des maximal zulässigen Stroms liegt.

3. System nach Anspruch 2, wobei der mindestens eine Prozessor (505; 505B) ferner zu Folgendem konfiguriert ist:
Schätzen, basierend auf der Autorisierung, jeweils einer verbleibenden Zeit (1411) zum Erreichen eines Sollwerts und einer verbleibenden Zeit (1409), die für eine vollständige Aufladung einer Batterie des BEV erforderlich ist, das mit der mindestens einen Slave-Vorrichtung (407; 407B) verknüpft ist, von der die Prioritätsanforderung empfangen wird; und
Steuern einer grafischen Benutzerschnittstelle (GUI) (1403) des BEV, das mit der mindestens einen Slave-Vorrichtung (407; 407B) verknüpft ist, um jeweils die geschätzte verbleibende Zeit (1411) zum Erreichen des Sollwerts und die geschätzte verbleibende Zeit (1409), die für die vollständige Aufladung erforderlich ist, anzuzeigen.

4. System nach einem der Ansprüche 1 bis 3, wobei der mindestens eine Prozessor (505; 505B) ferner zu Folgendem konfiguriert ist:
Schätzen einer verbleibenden Zeit (1405), die für eine vollständige Aufladung einer Batterie jedes der Vielzahl von BEVs erforderlich ist, basierend auf dem berechneten Gesamtstrom; und
Steuern einer grafischen Benutzeroberfläche (GUI) (1403) jedes der Vielzahl von BEVs, um die geschätzte verbleibende Zeit (1405), die für die vollständige Aufladung erforderlich ist, anzuzeigen.

5. System nach einem der Ansprüche 1 bis 4, wobei die Master-Vorrichtung (405; 405B) mit der Vielzahl von Slave-Vorrichtungen (407; 407B) entweder in einer Punkt-zu-Punkt-Konfiguration (400A) oder einer Mehrpunktkonfiguration (400B) verbunden ist.

6. System nach Anspruch 5, wobei der mindestens eine Prozessor (505; 505B) ferner dazu konfiguriert ist, basierend auf der bestimmten Wahrscheinlichkeit die Stromzuteilung für jede der Vielzahl von TRUs in einem Fall zu regeln, in dem die Master-Vorrichtung (405; 405B) mit der Vielzahl von Slave-Vorrichtungen (407; 407B) in der Mehrpunktkonfiguration (400B) verbunden ist.

7. System nach einem der Ansprüche 1 bis 6, wobei die hergestellte Kommunikation (503, 507, 511; 503B, 507B, 511B) einem von einer Kommunikation auf elektrischer Basis, einer Kommunikation auf Basis eines Controlled Area Netzwerk (CAN) (503; 503B), einer Power Line Communication (PLC) (507; 507B) oder einer drahtlosen Kommunikation (511; 511B) entspricht.

8. System nach einem der Ansprüche 1 bis 7, wobei die Regelung der Stromzuteilung einem Befehl der Master-Vorrichtung (405; 405B) an eine Gruppe von Slave-Vorrichtungen (407; 407B) aus der Vielzahl von Slave-Vorrichtungen (407; 407B) entspricht, um eine Stromaufnahme aus dem primären Stromnetz (401; 401B) zu verringern oder zu erhöhen, um eine Stromüberlastung zu vermeiden.

9. System nach einem der Ansprüche 1 bis 8,
wobei die Eingabedaten periodisch von jeder der Vielzahl von Slave-Vorrichtungen (407; 407B) empfangen werden,
die entsprechenden Betriebsmodi mindestens eines von einem Kühlmodus, einem Heizmodus, einem Nullmodus, einem Auflademodus einer Batterie der entsprechenden TRUs oder einem Standby-Modus der Vielzahl von TRUs beinhalten, und
ein aktueller Zustand jeder der Vielzahl von TRUs entweder einem Ein-Zustand oder einem Aus-Zustand entspricht.

10. Verfahren (1100) zur Verwaltung der Stromversorgung während des Ladevorgangs einer Vielzahl von batteriebetriebenen Elektrofahrzeugen (BEVs), umfassend:
Herstellen einer Kommunikation (503, 507, 511; 503B, 507B, 511B) mit jeder einer Vielzahl von Slave-Vorrichtungen (407; 407B), die in der Vielzahl von BEVs installiert sind (1101);
Empfangen, in Echtzeit über eine Kommunikationsschnittstelle (501; 501B) von der Vielzahl von Slave-Vorrichtungen (407; 407B), von Eingabedaten, die Informationen beinhalten, die sich auf einen Strompegel, der von jeder einer Vielzahl von Transportkühleinheiten (TRUs) der Vielzahl von BEVs während des Ladevorgangs verbraucht wird, einen entsprechenden Betriebsmodus der Vielzahl von TRUs und einen aktuellen Zustand von jeder der Vielzahl von TRUs beziehen (1103);
Berechnen eines Gesamtstroms, der aktuell von der Vielzahl von TRUs genutzt wird, basierend auf den empfangenen Eingabedaten (1105);
Bestimmen einer Wahrscheinlichkeit, ob der berechnete Gesamtstrom einen maximal zulässigen Strom überschreitet, der von einem primären Stromnetz (401; 401B) während des Ladevorgangs bereitgestellt wird, falls eine neue Ladeanforderung von einer neuen Slave-Vorrichtung (407; 407B) empfangen wird (1107); und
Regeln einer Stromzuteilung einer Gruppe von TRUs aus der Vielzahl von TRUs basierend auf der ermittelten Wahrscheinlichkeit derart, dass der berechnete Gesamtstrom unter einem Sättigungspunkt des maximal zulässigen Stroms bleibt (1109), und
wobei die Master-Vorrichtung (405; 405B) die Stromzuteilung an die TRUs, die Aufladevorgänge der BEVs und andere Ladevorgänge verwaltet.

11. Verfahren nach Anspruch 10, ferner umfassend:
Empfangen, basierend auf einer Benutzereingabe, einer Prioritätsanforderung von mindestens einer Slave-Vorrichtung (407; 407B) der Vielzahl von Slave-Vorrichtungen (407; 407B) für die Autorisierung zur Nutzung einer überschüssigen Strommenge aus dem primären Stromnetz (401; 401B) im Vergleich zu einem zugeteilten Strom der mindestens einen TRU; und
Autorisieren der mindestens einen TRU, die überschüssige Strommenge aus dem primären Stromnetz (401; 401B) zu nutzen, falls der berechnete Gesamtstrom innerhalb des Sättigungspunktes des maximal zulässigen Stroms liegt.

12. Verfahren nach Anspruch 11, ferner umfassend:
Schätzen, basierend auf der Autorisierung, jeweils einer verbleibenden Zeit (1411) zum Erreichen eines Sollwerts und einer verbleibenden Zeit (1409), die für eine vollständige Aufladung des BEV erforderlich ist, das mit der mindestens einen Slave-Vorrichtung (407; 407B) verknüpft ist, von der die Prioritätsanforderung empfangen wird; und
Steuern einer grafischen Benutzerschnittstelle (GUI) (1403) des BEV, das mit der mindestens einen Slave-Vorrichtung (407; 407B) verknüpft ist, um jeweils die geschätzte verbleibende Zeit (1411) zum Erreichen des Sollwerts und die geschätzte verbleibende Zeit (1409), die für die vollständige Aufladung erforderlich ist, anzuzeigen.

13. Verfahren nach einem der Ansprüche 10 bis 12, ferner umfassend:
Schätzen einer verbleibenden Zeit (1405), die für eine vollständige Aufladung jedes der Vielzahl von BEVs erforderlich ist, basierend auf dem berechneten Gesamtstrom; und
Steuern einer grafischen Benutzeroberfläche (GUI) (1403) jedes der Vielzahl von BEVs, um die geschätzte verbleibende Zeit (1405), die für die vollständige Aufladung erforderlich ist, anzuzeigen.

14. Verfahren nach einem der Ansprüche 10 bis 13,
wobei eine Master-Vorrichtung (405; 405B) mit der Vielzahl von Slave-Vorrichtungen (407; 407B) entweder in einer Punkt-zu-Punkt-Konfiguration (400A) oder einer Mehrpunktkonfiguration (400B) verbunden ist, und
wobei das Verfahren ferner Regeln der Stromzuteilung für jede der Vielzahl von TRUs in einem Fall, in dem die Master-Vorrichtung (405; 405B) mit der Vielzahl von Slave-Vorrichtungen (407; 407B) in der Mehrpunktkonfiguration (405B) verbunden ist, basierend auf der bestimmten Wahrscheinlichkeit umfasst.

15. Verfahren nach Anspruch 14, wobei die Regelung der Stromzuteilung einem Befehl der Master-Vorrichtung (405; 405B) an eine Gruppe von Slave-Vorrichtungen (407; 407B) aus der Vielzahl von Slave-Vorrichtungen (407; 407B) entspricht, um eine Stromaufnahme aus dem primären Stromnetz (401; 401B) zu verringern oder zu erhöhen, um eine Stromüberlastung zu vermeiden.

## Revendications

1. Système de charge de véhicule (400A ; 400B) de gestion d'alimentation électrique pendant une opération de charge d'une pluralité de véhicules électriques à batterie, BEV, comprenant :
un dispositif maître (405 ; 405B) connecté à un réseau d'alimentation principal (401 ; 401B), dans lequel
le dispositif maître (405 ; 405B) comporte au moins un processeur (505 ; 505B) et une interface de communication (501 ; 501B), et
le au moins un processeur (505 ; 505B) est configuré pour :
établir une communication (503, 507, 511 ; 503B, 507B, 511B) avec chacun d'une pluralité de dispositifs esclaves (407 ; 407B) installés dans la pluralité de BEV ;
recevoir, en temps réel par l'intermédiaire de l'interface de communication (501 ; 501B) de la pluralité de dispositifs esclaves (407 ; 407B), des données d'entrée comportant des informations associées à un niveau de puissance consommé par chacune d'une pluralité d'unités de réfrigération de transport, TRU, de la pluralité de BEV pendant l'opération de charge, un mode de fonctionnement correspondant de la pluralité de TRU et un état actuel de chacune de la pluralité de TRU ;
calculer une puissance totale actuellement utilisée par la pluralité de TRU sur la base des données d'entrée reçues ;
déterminer une probabilité que la puissance totale calculée excède une puissance maximale autorisée fournie par le réseau d'alimentation principal (401 ; 401B) pendant l'opération de charge, dans le cas où une nouvelle demande de charge serait reçue d'un nouveau dispositif esclave (407 ; 407B) ; et
réguler, sur la base de la probabilité déterminée, une répartition de puissance d'un groupe de TRU parmi la pluralité des TRU de sorte que la puissance totale calculée reste inférieure à un point de saturation de la puissance maximale autorisée, et
dans lequel le dispositif maître (405 ; 405B) est configuré pour gérer la répartition de puissance aux TRU, aux opérations de recharge de BEV et aux autres opérations de charge.

2. Système selon la revendication 1, dans lequel le au moins un processeur (505 ; 505B) est en outre configuré pour :
recevoir, sur la base d'une entrée utilisateur, une demande de priorité d'au moins un dispositif esclave (407 ; 407B) de la pluralité de dispositifs esclaves (407 ; 407B) pour une autorisation d'utiliser une quantité excédentaire de puissance provenant du réseau d'alimentation principal (401 ; 401B) par rapport à une puissance répartie de la au moins une TRU ; et
autoriser la au moins une TRU à utiliser la quantité excédentaire de puissance du réseau d'alimentation principal (401 ; 401B) dans le cas où la puissance totale calculée se situe au point de saturation de la puissance maximale autorisée.

3. Système selon la revendication 2, dans lequel le au moins un processeur (505 ; 505B) est en outre configuré pour :
estimer, sur la base de l'autorisation, chacun d'un temps restant (1411) pour atteindre un point de consigne et d'un temps restant (1409) requis pour une recharge complète d'une batterie du BEV associé au moins un dispositif esclave (407 ; 407B) à partir duquel la demande de priorité est reçue ; et
commander une interface utilisateur graphique, GUI, (1403) du BEV associé au moins un dispositif esclave (407 ; 407B) pour afficher chacun du temps restant (1411) estimé pour atteindre le point de consigne et du temps restant (1409) requis estimé pour la recharge complète.

4. Système selon l'une quelconque des revendications 1 à 3, dans lequel le au moins un processeur (505 ; 505B) est en outre configuré pour :
estimer un temps restant (1405) requis pour une recharge complète d'une batterie de chacun de la pluralité de BEV sur la base de la puissance totale calculée ; et
commander une interface utilisateur graphique, GUI, (1403) de chacun de la pluralité de BEV pour afficher chacun du temps restant (1405) estimé requis pour la recharge complète.

5. Système selon l'une quelconque des revendications 1 à 4, dans lequel le dispositif maître (405 ; 405B) est connecté à la pluralité de dispositifs esclaves (407 ; 407B) dans une d'une configuration point à point (400A) ou d'une configuration multipoint (400B).

6. Système selon la revendication 5, dans lequel le au moins un processeur (505 ; 505B) est en outre configuré pour réguler, sur la base de la probabilité déterminée, la répartition de puissance pour chacune de la pluralité de TRU dans un cas où le dispositif maître (405 ; 405B) est connecté à la pluralité de dispositifs esclaves (407 ; 407B) dans la configuration multipoint (400B).

7. Système selon l'une quelconque des revendications 1 à 6, dans lequel la communication (503, 507, 511 ; 503B, 507B, 511B) établie correspond à une d'une communication électrique, d'une communication basée sur un réseau de zone de contrôleur, CAN (503 ; 503B), d'une communication par courant porteur en ligne, PLC (507 ; 507B) ou d'une communication sans fil (511 ; 511B).

8. Système selon l'une quelconque des revendications 1 à 7, dans lequel la régulation de la répartition de puissance correspond à une commande du dispositif maître (405 ; 405B) à un groupe de dispositifs esclaves (407 ; 407B) parmi la pluralité de dispositifs esclaves (407 ; 407B) pour réduire ou augmenter une consommation de puissance du réseau d'alimentation principal (401 ; 401B) afin d'éviter une surcharge de puissance.

9. Système selon l'une quelconque des revendications 1 à 8, dans lequel les données d'entrée sont reçues périodiquement de chacun de la pluralité des dispositifs esclaves (407 ; 407B), les modes de fonctionnement correspondants comportent au moins l'un d'un mode de refroidissement, d'un mode de chauffage, d'un mode nul, d'un mode de recharge d'une batterie de TRU correspondantes, ou d'un mode de veille de la pluralité de TRU, et un état actuel de chacune de la pluralité de TRU correspond à un d'un état de marche ou d'un état d'arrêt.

10. Procédé (1100) de gestion d'alimentation électrique pendant une opération de charge d'une pluralité de véhicules électriques à batterie, BEV, comprenant :
l'établissement d'une communication (503, 507, 511 ; 503B, 507B, 511B) avec chacun d'une pluralité de dispositifs esclaves (407 ; 407B) installés dans la pluralité de BEV (1101) ;
la réception, en temps réel par l'intermédiaire de l'interface de communication (501 ; 501B) de la pluralité de dispositifs esclaves (407 ; 407B), de données d'entrée comportant des informations associées à un niveau de puissance consommé par chacune d'une pluralité d'unités de réfrigération de transport, TRU, de la pluralité de BEV pendant l'opération de charge, un mode de fonctionnement correspondant de la pluralité de TRU, un état actuel de chacune de la pluralité de TRU (1103) ;
le calcul d'une puissance totale actuellement utilisée par la pluralité de TRU sur la base des données d'entrée reçues (1105) ; la détermination d'une probabilité que la puissance totale calculée excède une puissance maximale autorisée fournie par un réseau d'alimentation principal (401 ; 401B) pendant l'opération de charge, dans le cas où une nouvelle demande de charge serait reçue d'un nouveau dispositif esclave (407 ; 407B) (1107) ; et la régulation, sur la base de la probabilité déterminée, d'une répartition de puissance d'un groupe de TRU parmi la pluralité des TRU de sorte que la puissance totale calculée reste inférieure à un point de saturation de la puissance maximale autorisée (1109), et
dans lequel le dispositif maître (405 ; 405B) gère la répartition de puissance aux TRU, aux opérations de recharge de BEV et aux autres opérations de charge.

11. Procédé selon la revendication 10, comprenant en outre :
la réception, sur la base d'une entrée utilisateur, d'une demande de priorité d'au moins un dispositif esclave (407 ; 407B) de la pluralité de dispositifs esclaves (407 ; 407B) pour une autorisation d'utiliser une quantité excédentaire de puissance provenant du réseau d'alimentation principal (401 ; 401B) par rapport à une puissance répartie de la au moins une TRU ; et
l'autorisation de la au moins une TRU à utiliser la quantité excédentaire de puissance du réseau d'alimentation principal (401 ; 401B) dans le cas où la puissance totale calculée se situe au point de saturation de la puissance maximale autorisée.

12. Procédé selon la revendication 11, comprenant en outre :
l'estimation, sur la base de l'autorisation, de chacun d'un temps restant (1411) pour atteindre un point de consigne et d'un temps restant (1409) requis pour une recharge complète du BEV associé au moins un dispositif esclave (407 ; 407B) à partir duquel la demande de priorité est reçue ; et
la commande d'une interface utilisateur graphique, GUI, (1403) du BEV associé au moins un dispositif esclave (407 ; 407B) pour afficher chacun du temps restant (1411) estimé pour atteindre le point de consigne et du temps restant (1409) requis estimé pour la recharge complète.

13. Procédé selon l'une quelconque des revendications 10 à 12, comprenant en outre :
l'estimation d'un temps restant (1405) requis pour une recharge complète de chacun de la pluralité de BEV sur la base de la puissance totale calculée ; et
la commande d'une interface utilisateur graphique, GUI, (1403) de chacun de la pluralité de BEV pour afficher chacun du temps restant (1405) estimé requis pour la recharge complète.

14. Procédé selon l'une quelconque des revendications 10 à 13,
dans lequel un dispositif maître (405 ; 405B) est connecté à la pluralité de dispositifs esclaves (407 ; 407B) dans une d'une configuration point à point (400A) ou d'une configuration multipoint (400B), et
le procédé comprend en outre la régulation, sur la base de la probabilité déterminée, de la répartition de puissance pour chacune de la pluralité de TRU dans un cas où le dispositif maître (405 ; 405B) est connecté à la pluralité de dispositifs esclaves (407 ; 407B) dans la configuration multipoint (405B).

15. Procédé selon la revendication 14, dans lequel la régulation de la répartition de puissance correspond à une commande du dispositif maître (405 ; 405B) à un groupe de dispositifs esclaves (407 ; 407B) parmi la pluralité de dispositifs esclaves (407 ; 407B) pour réduire ou augmenter une consommation de puissance du réseau d'alimentation principal (401 ; 401B) afin d'éviter une surcharge de puissance.
